(19) Europäisches Patentamt European Patent Office Office européen des brevets

(11) **EP 4 677 250 B1**

(12) **EUROPEAN PATENT SPECIFICATION**

(45) Date of publication and mention
of the grant of the patent:
**22.04.2026 Bulletin 2026/17**

(21) Application number: **24712558.6**

(22) Date of filing: **05.03.2024**

(51) International Patent Classification (IPC):
**F16K 31/52** *(2006.01)*

(52) Cooperative Patent Classification (CPC):
**F16K 5/204; F16K 5/0647; F16K 31/522**

(86) International application number:
**PCT/GB2024/050587**

(87) International publication number:
**WO 2024/189315 (19.09.2024 Gazette 2024/38)**

(54) **LOW OPERATING TORQUE NON-CONTACT VALVE**

KONTAKTFREIES VENTIL MIT NIEDRIGEM BETRIEBSDREHMOMENT

SOUPAPE SANS CONTACT A FAIBLE COUPLE DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.03.2023 GB 202303585**

(43) Date of publication of application:
**14.01.2026 Bulletin 2026/03**

(73) Proprietor: **ACTUATION LAB LTD**
**Bedminster**
**Bristol BS3 4AG (GB)**

(72) Inventor: **DICKER, Michael Patrick Maher**
**Bristol Bristol BS3 4AG (GB)**

(74) Representative: **The IP Asset Partnership Limited**
**Prama House**
**267 Banbury Road**
**Oxford OX2 7HT (GB)**

(56) References cited:
**WO-A1-2019/229265**

**Description**

Field

The present invention relates to valves. More particularly, the present invention relates to a valve for obturating a pipe for carrying fluids.

Background

A valve is used to seal a pipe to prevent flow of fluid therein. A fluid may be a liquid or a gas. There are a number of challenges that are presented when designing a valve. A valve must be able to operate to open and close under high pressure and high flow rates that may be seen in fluid flowing in a pipe. The success of a design of valve is measured on how well it prevents flow when in the closed, sealed position, what pressures it may withstand both in preventing flow and leaking externally from any seals such as stem seals, and how much obstruction or reduction in flow the valve provides compared to a section of plain pipe when the valve is in the open position. An ideal valve will create a perfect seal at high pressures in both flow directions when in the closed position and allow clean flow of fluid through the open valve in the same fashion as a section of plain pipe.

The second challenge when designing a valve is allowing the valve to move between the open and closed positions when pressurised fluid is being held by the valve, in either direction or is flowing at high velocity in the pipe. The pressure of fluid on valve sealing or obturating portions can create substantial friction between sealing faces and a valve seat or between components of the valve mechanism which must be overcome by actuators. High friction and high forces must be overcome to allow a valve to function, requiring greater force to actuate a valve and thus more powerful actuators. High force and high friction also result in high wear.

Butterfly valves are a common design employed for flow control in pipes and other conduits carrying fluid. They consist of a disc or valve face that rotates in the pipe body on a shaft that rotates about a pivot at each end. By rotating the shaft 90 degrees, the disc can move from being oriented perpendicular to the flow in the pipe, thereby blocking it, to parallel, allowing the flow to pass relatively unimpeded. Butterfly valves are beneficial due to their fast and simple rotational operation, lightweight, compact length, and simple operation. However, since the disc remains in the centre of the pipe flow, partially blocking the pipe, even when fully open, the flow efficiency through the valve is not as high as those with full bore unimpeded flow such as ball valves. However, ball valves bring their own issues discussed below. Having the disc remain in the centre of the flow while open also leaves it susceptible to erosions and other damage from particulate matter in the stream.

Gate valves can be pressure balanced and do achieve unrestricted flow. Only slab and parallel slide type are pressure balanced but these have significant friction and wear between face and seat during operation. Wedge and expanding type gate valves remove this friction but are no longer pressure balanced and therefore require a closing or opening force to be maintained. In addition, the linear motion of gate valves can make fast actuation prohibitive while adding to the challenge of stem sealing.

Valve designs of a rotary plug type form, such as a ball valve can combine a pressure balanced design with desirable quarter-turn (90 degree) actuation. However, in their simplest form friction between the valve face (plug or ball) and seat occurs during operation. Rotary plug valves that provide no contact between face and seat during operation are known and employ 4 broad strategies. These solve the problem of wear and galling of the valve seat (main seal element) and reduce friction throughout the operating rotation of the valve, while providing a mechanical means (independent of fluid pressure) for energising (compressing) the main valve seal (seat).

1. Axially expandable plug body in this concept the valve face is retracted out of the valve seat before the valve is rotated. US2277975A discloses a valve that includes a plug body that is in two parts. When the valve is moved into the closed position the mechanism forces the two parts of the plug body apart causing each to translate axially in the direction of the pipe centreline in order to engage a sealing face.

2. Axially translatable valve seats: in this concept the seats are engaged with the valve operating mechanism, such that they are driven off the plug axially before the valve is rotated. US3934606A discloses such a valve. There are not believed to be commercial implementations of either concept 1 or 2.

3. Plug pivoting around lower trunnion before rotation: This is the most common implementation of a non-contact ball valve. In these embodiments, the plug pivots away from the seat around a lower trunnion before rotating about said trunnion to the open position. Although this reduces the friction required to unseat the valve, it also increases the work done against pressure when opening the valve. To overcome this a mechanism must be employed with some mechanical advantage, for commercial implementation this has primarily dictated the use of a linear valve stem actuation motion. US3515371A discloses such a valve with a vertical actuation rod moved by a screw thread. The actuation rod includes a follower, this leads to greater difficulty of actuation (cost, size, stem leakage).

There are many patents that disclose valves operating on this principle including rotary rather than linear stem movement. However, the only commercial implementation of this is the Tolboom valve US202(12)15259A1.

4. Plug rotation axis eccentric to valve seat axis: Another common and simple way of achieving non-contact plug operation from a rotary actuation input is to offset the plug rotation axis from the bore centre of the pipe or seat, such that the sealing face moves or "cams" out of the seat when opening. US2765142A discloses such a valve. They are generally, directly operated by rotation of the eccentric shaft, without any intermediate mechanism and accompany mechanical advantage. Although these do not reduce the initial operating friction as much as those designs that pivot around the lower trunnion, the increase in torque required to actuate the valve when under pressure is substantially reduced, which can lead to lower operating torques. However, unlike the lower trunnion pivot designs, eccentric designs have no mechanism for adding mechanical advantage to the input torque to reduce operating torque further.

A valve according to the preamble of claim 1 is disclosed in WO 2019/229265 A1, in which the arm (30) is not constrained to rotate about only two axes of rotation. Valves such as these described can be used for controlling the flow of any fluid. However, hydrogen in particular presents unique challenges and environmental concerns are leading to greater adoption of hydrogen. Hydrogen is stored as a gas at extremely high pressures placing a high load on valves used to contain the fluid, increasing friction and forces that need to be overcome to actuate the valve. Due to its small molecular size hydrogen can pass through seals and materials that would normally contain other gasses or fluids making it particularly hard to contain.

<u>Summary of Invention</u>

Aspects and/or embodiments seek to provide a valve comprising:

valve body having an Inlet and an outlet defining a bore having a central axis X at the bore centre and a radius r;
a valve obturating portion, an arm and a rotary actuation link, movable between a first open position and a second closed position;
the valve obturating portion constrained to rotate about a maximum of two axes of rotation and including a sealing face for sealing the bore when the obturating portion is in the second closed position, an inner face defining a through aperture through which a fluid may pass when the obturating portion is in the first open position;
the arm having a first end and a second end and constrained to rotate about two axes of rotation;
the outlet including a valve seat for receiving said sealing face when in the closed position;
the rotary actuation link, connectable to an actuator for moving the valve between the first open position and the second closed position, rotatable about an axis E perpendicular to the Axis X and having a connection point radially offset a distance "e" from the axis E;
wherein the arm extends from the obturating portion, having the first end connected to the obturating portion for imparting movement thereto and a second end pivotally connected to the actuation link at the connection point.

Advantageously the valve provides a low friction open and closing mechanism with a variable mechanical advantage that increases through the motion of the valve from the open position to the closed position. Therefore, the valve provides greatest mechanical advantage when required at the point of closing of the valve and the initial movement from closed at which point the valve actuator has the greatest forces to overcome. Thus a smaller, less powerful or cheaper actuator may be used to operate the valve. The valve further advantageously allows an unobstructed fluid flow path when in the open position.

Preferably the connection point is located on and movable in a plane $\alpha$ perpendicular to the axis E from the first open position to the second closed position. Therefore, preferably the second end of the arm is also located on and moveable substantially in and preferably in the plane $\alpha$.

Preferably including a vertical plane $\psi$ defined by the axis X and the axis of rotation E of the actuator link; wherein the obturating portion has an axis of rotation A that is perpendicular to the plane $\psi$. Preferably the axis of rotation A is perpendicular to the plane $\psi$ at least in the open position and the closed position.

Preferably the axis A is offset from the central axis X in the direction of the rotary actuation link by a distance "a" toward the connection point, and the distance a is greater than 0.

The offset a of the axis A results in the sealing face moving away from the valve seat on opening rather than sliding across it, as would be the case for a traditional ball valve, thereby providing clearance between the valve seat and the sealing face when the valve is moving and providing a low friction solution to valve opening and closing.

Preferably the through aperture of the obturating portion includes a bore centre having an axis X', a plane $\beta$

extending through the sealing face, defining an angle θ therebetween and wherein the angle θ is greater than zero.

The angle θ between the sealing face and the bore centre advantageously reduces the angle through which the obturating portion must move between the closed position and the open position which is advantageous in reducing the angle through which the actuation link must rotate to move the valve between the open position and the closed position further increasing the benefit of the mechanical advantage provided by the mechanism.

Preferably the axis E intersects with the Axis X.

Preferably the second end of the arm is pivotally connected to the actuation link at connection point such that the second end is free to rotate in three axes relative to the connection point.

Preferably the second end of the arm comprises a ball and the connection point comprises a socket which advantageously allows the three rotational degrees of freedom of the second end of the arm.

Preferably the distance e is greater than the radius r. Preferably the plane α is offset from the bore centre X a distance greater than the radius r of the bore. Which advantageously allows the arm to not interfere with the through aperture of the obturating portion whilst allowing the second end of the arm to follow the path of the connecting point.

Preferably the actuator link is rotatable between 45 and 180 degrees between the first open position and the second closed position.

Preferably the body includes a movement stop for limiting movement of the actuation link when the valve is in the first open position and/or the second closed position. Preferably the actuation link includes a movement stop complementary to and located to engage the movement stop of the body in the first open and/or second closed positions. Advantageously ensuring perfect alignment of the bore with the through aperture of the obturating portion in the open position and optimum sealing of the valve in the closed position.

Preferably including a valve seat force multiplier comprising a first surface or surfaces of the body located above the axis A and facing the valve seat and a second surface or surfaces of the obturating portion located to engage the first surfaces when the valve is in the second closed position for exerting force on the valve seat from the sealing face. Advantageously increasing the force applied to the valve seat by the sealing face and thereby improving the seal of the valve and taking up any slack in the pivots of the axis A.

Preferably the obturating portion is rotatable about a second axis of rotation B and fixed to the arm so as to move therewith. The arm fixed to the obturating portion imparts rotation in the second axis of rotation B and the first axis of rotation A

Preferably the axis B is coincident with the valve body bore centre X. Thereby maintaining alignment of the sealing face with the valve seat.

Preferably the body includes one or more circumferentially extending channels;

further including one or more followers free to move along said one or more circumferentially extending channels for providing the second axis of rotation B to the obturating portion.

Preferably the one or more followers are elongate and the obturating portion is rotatably connected to the one or more followers at a pair of pivots for providing rotation of the obturating portion about the axis A.

Preferably the pivot comprises a pair of apertures located in one of the follower or the obturating portion and a pair of pivot pins located on the other of the follower or the obturating portion.

Preferably the followers comprise a cylindrical protrusion on the obturating portion along the axis of rotation A about which the obturating portion may pivot.

Preferably the circumferentially extending channels extend about the axis X, preferably in a plane ω perpendicular to the bore centre X. Thereby providing the axis of rotation B.

Preferably the obturating portion is constrained to rotate about a single axis of rotation and that axis is the axis A. Preferably the axis A is fixed perpendicular to the axis E. Preferably the arm is pivotally connected to the obturating portion at an arm pivot connection and constrained to rotate about a single axis C relative thereto. Thereby allowing the valve to be moved between the open position and the closed position by a rotational input of 90 degrees or less whilst providing a beneficial mechanical advantage that increases closer to the closed position of the valve where most resistance to movement of the obturating portion will occur.

Preferably axis C is located in the vertical plane ψ and intersects said axis A.

Preferably there is a distance "**f**" perpendicular to the plane α, between the plane α and the axis A and first end and the second end of the arm are separated by said distance **f.**

Preferably in the closed position the second end of the arm is located on the plane ψ and the relationship between the angle θ, the distance **e** and the distance **f** is defined by the equation $\cos(\theta) = \dfrac{e}{f}$ . Thus providing a favourable geometry.

Preferably the valve includes a vertical plane ψ defined by the valve body bore centre X and the axis of rotation E of the actuator link. Further preferably, in the closed position the second end of the arm is offset a distance **g** that is greater than 0 from said vertical plane ψ. Advantageously the offset **g** is such that force applied to the second end via the actuation link at connection point toward said vertical plane $\psi$ causes forces acting to create further rotation of the obturating portion about axis A and thus greater sealing force between the seat and the sealing face.

The offset distance **g** creates an angle between the arm and the central plane $\psi$ with the valve in the closed position. The axis C is located on the central plane $\psi$ thus torque applied to the actuation link when the valve is already closed exerts a force on the valve seat by the sealing face with a high mechanical advantage that improves sealing of the valve.

Preferably the relationship between the angle $\theta$, the distance **g,** the distance **e** and the distance **f** is defined by the equation

$$\cos\left(-\cos^{-1}\left(\frac{f}{\sqrt{f^2-g^2+e^2}}\right)-\tan^{-1}\left(\frac{\sqrt{f^2-g^2}}{e}\right)-\theta+90\right)=\frac{e}{f}.$$

Thus providing a favourable geometry.

Preferably the body includes a housing and a closing portion.

Preferably the actuation link is enclosed and the only apertures therein are the inlet and the outlet. This advantageously removes a failure point, removes a maintenance component, reduces friction further and improves the sealing of the valve, in particular if the fluid being passed is hydrogen gas.

Preferably the actuation link includes a first magnetic coupling for receiving an actuating force from an actuator comprising a second magnetic coupling.

Preferably the valve includes an actuator connected to the actuation link for moving the valve between a first open position and a second closed position.

Preferably the actuation link includes a first magnetic coupling and the actuator comprises a second magnetic coupling magnetically coupled to the first magnetic coupling for passing torque therebetween.

Brief Description of Drawings

Embodiments will now be described, by way of example only and with reference to the accompanying drawings having like-reference numerals, in which:

Figure 1 shows a section view of a valve according to the current invention, having an obturating portion constrained to move in two rotational degrees of freedom, in the open position, taken along the bore centre of the valve;

Figure 2 shows a section view of the valve of figure 1 in the open position taken across the bore centre of the valve;

Figure 3 shows a section of the valve of figure 1 taken along the bore centre of the valve with the valve between the open position and the closed position;

Figure 4 shows a section of the valve of figure 1 taken across the bore centre of the valve with the valve between the open position and the closed position;

Figure 5 shows a section view of the valve of figure 1 in the closed position taken along the bore centre;

Figure 6 shows a section view of the valve of figure 1 in the closed position taken across the bore centre of the valve;

Figure 7 shows a section of a valve according to the current invention with the obturating portion constrained to move about a single rotational degree of freedom, in the open position, taken across the bore centre of the valve;

Figure 8 shows a section of the valve of figure 7 taken along the bore centre with the valve in the open position.

Figure 9 shows the valve of figure 7 in the closed position with a section taken through the housing across the bore centre;

Figure 10 shows a section of the valve of figure 7 in the closed position taken along the bore centre;

Figure 11 shows the valve of figure 7 with a section of the housing removed in the open position;

Figure 12 shows the valve of figure 7 with a section of the housing removed between the open position and the closed position;

Figure 13 shows the valve of figure 7 with a section of the housing removed in the closed position;

Figure 14 shows a section of a variant of the valve of figure 7, with the section taken in the direction of the bore centre offset from the bore centre to display a valve engagement for controlling the movement of the obturating portion, the variant includes a magnetic coupling and an enclosed actuation link;

Figure 15 shows a valve assembly according to the current invention including a magnetic coupling and an actuator; and

Figure 16 shows a graph of the mechanical advantage provided by a valve of the current invention.

Specific Description

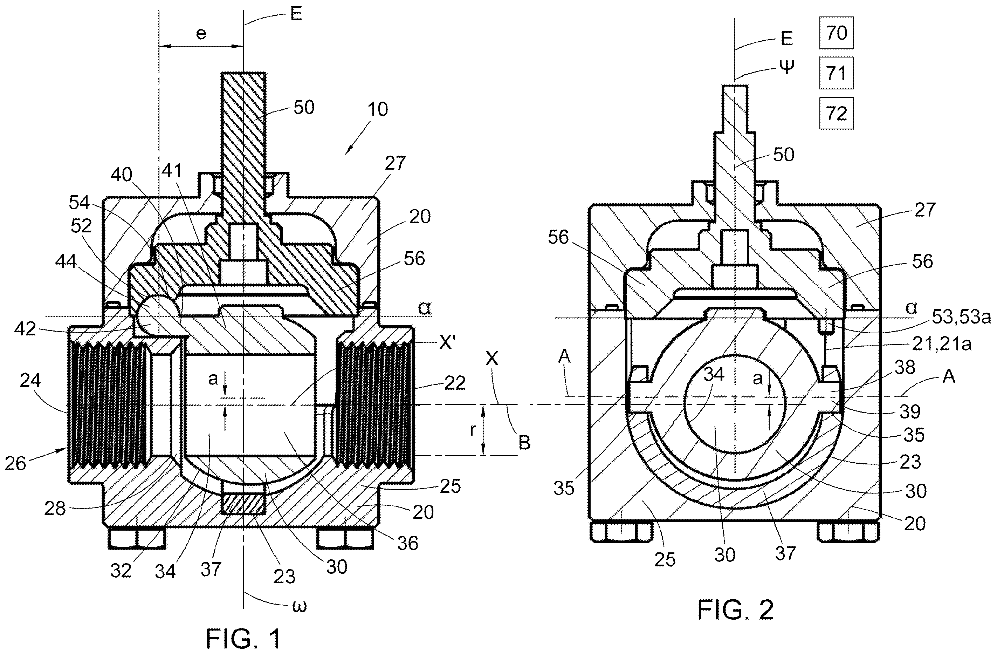

Referring to Figures 1 to 6 a first embodiment will now be described. Figures 1 to 6 show a valve 10 for use in a pipe or other apparatus for passing fluid, that is movable from a first open position 11 in which unobstructed flow through the valve 10 is allowed to a second closed position 12 in which flow is prevented. The valve 10 includes a body 20 that may include a housing 25 and a closing portion 27. The body 20 includes an inlet 22 and an outlet 24 defining a bore 26 connecting the inlet 22 and the outlet 24 through which fluid may flow when the valve 10 is in the open position 11 and which is closed to prevent fluid from flowing when in the closed position 12. The bore 26 has a bore centre defining an axis X extending along said bore centre.

An obturating portion 30 is shown for sealing the bore 26 for preventing the flow of fluid therethrough. The obturating portion 30 is movable between a first open position 11 when the valve 10 is in the first open position 11 and a second closed position 12 when the valve is in the second closed position 12. The obturating portion 30 includes an inner face 34 defining a through aperture 36 through which fluid can flow when the valve 10 is in the open position 11. The through aperture 36 may be circular in profile and define an axis X' at its centre The obturating portion 30 also includes a sealing face 32 and the bore 26 includes a valve seat 28 for receiving said sealing face 32 for closing the bore 26 and preventing flow of fluid when the valve 10 is in the closed position 12. The obturating portion 30 is constrained to move about two axes such that it is limited to movement in two rotational degrees of freedom. An arm 40 extends from the obturating portion 30. The arm 40 is fixed to the obturating portion 30 for imparting movement thereto. Thus the arm 40 is movable with the obturating portion 30. Accordingly the arm 40 is also movable between a first open position 11 when the valve 10 is in the first open position 11 and a second closed position 12 when the valve is in the second closed position 12. The arm 40 has a first end 41 fixed to the obturating portion 30 and a second end 42. The arm 40 preferably extends in the direction of X' offset a distance e from the bore centre in a direction perpendicular to the axis A. "Fixed to" herein means immovably attached to i.e. the arm 40 cannot move relative to the obturating portion 30 and any movement of the obturating portion 30 will cause an equivalent movement of the arm 40.

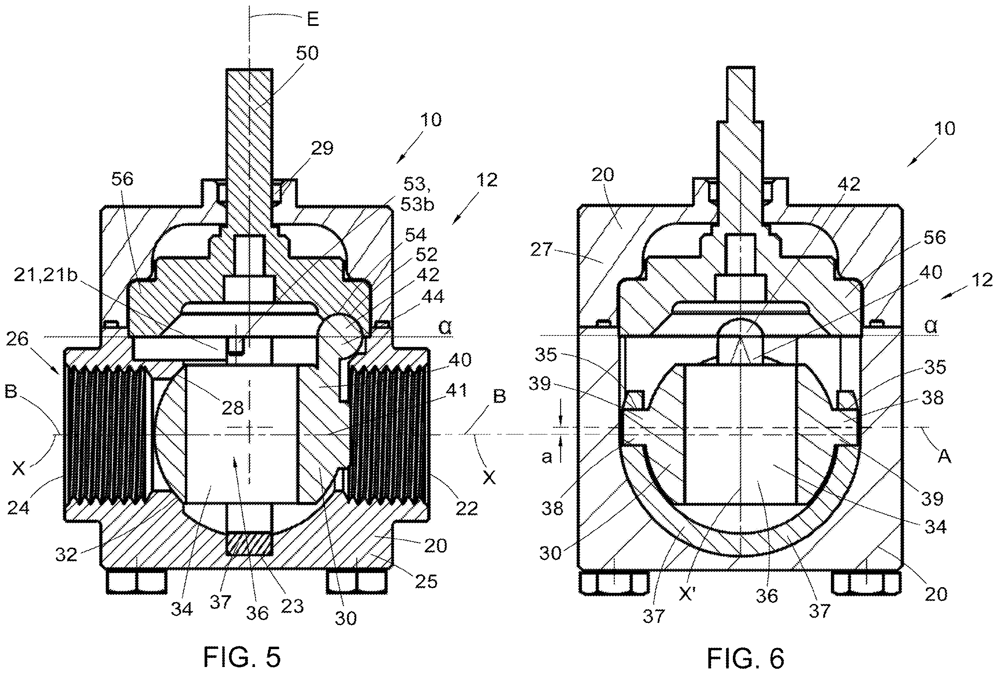

An actuation link 50 is provided extending along and rotatable about an axis E perpendicular to and intersecting the axis X. Together axis X and axis E define a vertical longitudinal plane $\psi$. The actuation link 50 is connectable to an actuator 70 for the rotation thereof and includes a connection point 52 offset a perpendicular distance e from the axis E. The actuator 70 may be powered such as a rotary or linear electric, hydraulic or pneumatic actuator 70 and/or may be a means for manual actuation 74 such as a handle 74 for manual actuation of the valve 10. The actuation link 50 is connected to the second end 42 of the arm 40 at the connection point 52. The connection point 52 is a three rotational degree of freedom pivotal connection that allows movement of the second end 42 of the arm 40 in and/or limits said movement to three rotational degrees of freedom relative to the actuation link 50. Preferably the connection point 52 comprises a ball 44 and a socket 54. In figures 1 to 6 the connection point 52 is shown located on a cylindrical or radially and circumferentially extending portion 56 of the actuation link 50. However, it will be understood that the connection point 52 could also be offset from the axis E on a crank arm. The body 20 includes an actuation link locating means 29 for locating the actuation link 50. It will be noted that in figures 1 to 6 the actuation link locating means 29 is included in the closing portion 27, however, the locating means 29 may be included in the housing 25 and or the closing portion 27. Preferably the actuation link 50 is constrained by the locating means 29 to move in a single rotational degree of freedom about the axis E. The locating means 29 may comprise one or more axial and/or rotational bearings or support faces. The body 20 and actuation link 50 may further comprise complementary movement stops 21, 53 for limiting movement of the actuation link 50. The complementary movement stops 21, 53 may comprise complementary valve open stops 21a and 53a and complementary valve close stops 21b and 53b each comprising surfaces that engage in the respective open position 11 and closed position 12. Said surfaces preferably extending radially from the axis of rotation E. Figure 2 shows complementary valve open stops 21a and 53a for limiting movement of the actuation link 50 when the valve is in the first open position 11. Figure 5 shows valve close stops 21b and 53b for limiting movement of the actuation link 50 when the valve is in the closed position 12. Note complementary movements stops 21 and 53 may be omitted and the actuation link 50 allowed to rotate a full 360 degrees to cycle the valve between open and closed positions. However, in such an arrangement it would be challenging to align open and closed positions.

The obturating portion 30 is constrained to rotate in a maximum of two rotational degrees of freedom; in this first embodiment this is about a first axis A and a second axis B. Accordingly, in this first embodiment the arm 40 that is fixed to the obturating portion 30 is also constrained to rotate about a maximum of two rotational degrees of freedom and in this first embodiment this is about a first axis A and a second axis B. The first axis A is perpendicular to the bore centre X and is offset a distance "a" from the axis X. Distance "a" is greater than zero. In at least the first open position 11 and/or the second closed position 12 the axis A is perpendicular to Axis E. The second axis B is coincident with the axis X. The valve 10 further includes a pair of pivots 38 on the axis A about which the obturating portion rotates. The body 20 includes one or more circumferentially extending channels 23 in which the pivots 38 can translate in order to provide rotation of the obturating portion 30 about the axis B. The circumferentially extending channels 23 extend about the axis X preferably in a plane $\omega$ perpendicular to axis X. The pivots 38 may each include pivot pins 39 extending along axis A and accommodated within the one or more circumferentially extending channels 23. To aid location within the one or more circumferentially extending channels 23 the pivot pins 39 may be located by one or more followers 37 sliding within the circumferentially extending channel 23. In figures 1 to 6 a single follower 37 can be seen within the channel 23 having a pair of pivot apertures 35 located on the axis A within which the pivot pins 39 are accommodated and rotate.

In use the actuation link 50 is rotated about the axis E to move the valve 10 between the first open position 11 and second closed position 12. Figures 1 and 2 show the valve 10 in the first open position 11 with the through aperture 36 of the obturating portion located to allow fluid to flow between the inlet 22 and the outlet 24. Valve open stops 21a and 53a are in contact. Preferably in the open position 11 the axis X' of the obturating portion is in alignment with the axis X of the housing to minimise resistance to flow. In the open position in Figure 1 it can be seen that the connection point 52 is located above the X axis toward the outlet 24 having the valve seat 28. In the open position 11 the axis A is perpendicular to the axis X and the axis E.

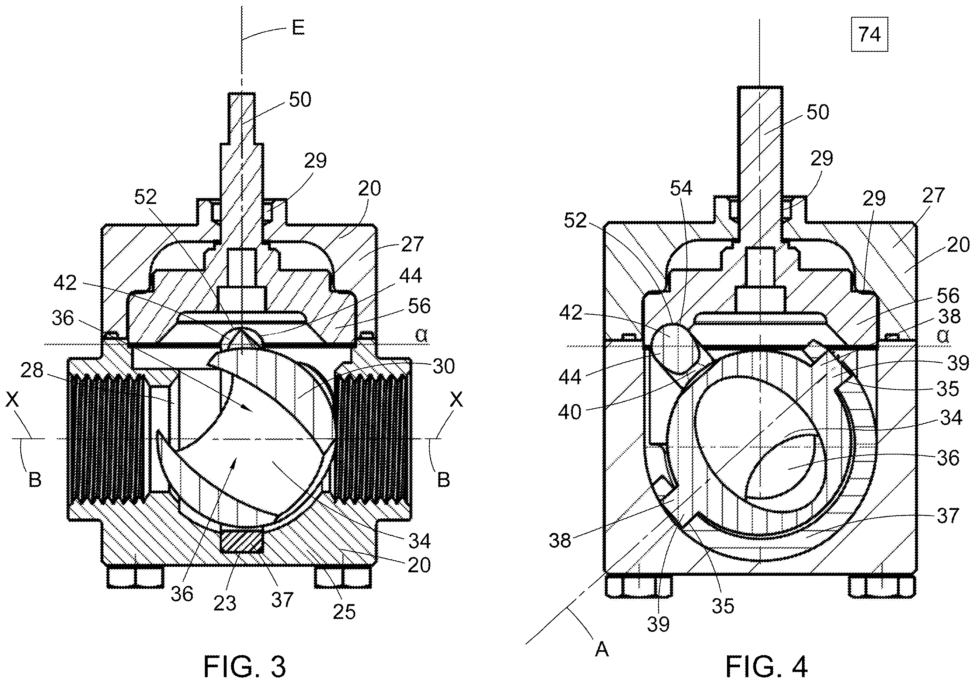

Figures 3 and 4 show the valve 10 in an intermediate position between the first open position 11 and the second closed position 12. The actuation link 50 is rotated approximately 90 degrees about the axis E causing the connection point 52 and thus the second end 42 of the arm 40 to follow a circumferential path about the axis E in a plane $\alpha$, perpendicular to the axis E. In some geometries the connection point 52 may accommodate a small amount of deviation from the plane $\alpha$ by the second end 42 of the arm 40; such deviation can be tolerated and the valve 10 still function according to the current invention. Initially the translation of the fixing point 52 is lateral, perpendicular to the axis X causing rotation of the obturating portion about axis B. As the fixing point 52 follows the circular path and thus starts to move longitudinally in the direction of axis X the obturating portion 30 moves about the axis A causing the axis X' of the through aperture 36 of the obturating portion to move from the first open position 11 in line with the bore centre axis X toward the closed position 12 wherein X' is in a position perpendicular or close to perpendicular to axis X. Note at the position shown in Figures 3 and 4 movement of the connection point 52 is longitudinal in the direction of the bore centre X.

Due to the offset of the axis A from the axis X there is clearance between the valve seat 28 and the sealing face 32 when the valve is in the open position 11 and transitioning toward the closed position 12 as can be seen in figures 3 and 4. Between the first open position 11 and the second closed position 12 the first axis A is inclined to its original position whilst maintaining intersection with axis E and the same offset a from the axis X. The second axis B remains in line with the axis X.

Figures 5 and 6 show the valve 10 in the second closed position 12. The actuation link 50 has rotated 180 degrees about axis E or close to 180 degrees about axis E. It will be understood that the actuation link 50 may rotate less than 180 degrees and preferably between 170 and 180 degrees. As the valve 10 nears the closed position 12 the connection point 52 is moving both laterally perpendicular to axis X and longitudinally along axis X. Near the closed position 12, due to the orientation of the obturating portion 30 and thus the arm 40, both the lateral and longitudinal movement of the connection point 52 and thus the second end 42 of the arm 40 act to rotate the obturating portion about axis A acting to close the valve 10. However, the movement of the of the actuation link 50 is large relative to the rotation of the obturating portion 30 about the axis A thus the mechanical advantage is high providing a high closing force. Thus a lower powered actuator 70 can be used to power a valve 10 of the current invention.

In the second closed position 12 the valve seat 28 and the sealing face 32 of the obturating portion 30 are in contact for preventing flow of fluid between the inlet 22 and the outlet 24. Due to the offset a of the axis A the rotation of the obturating portion about axis A has closed the clearance between the valve seat 28 and the sealing face 32. The obturating portion 30 has "cammed" into the valve seat 28 with little friction between the obturating portion 30 and the valve seat 28 over the majority of the movement of the valve 10 as the valve seat 28 and sealing face 32 are only in contact for the very final part of the moment of the valve 10 closing at which point mechanical advantage is high as discussed above.

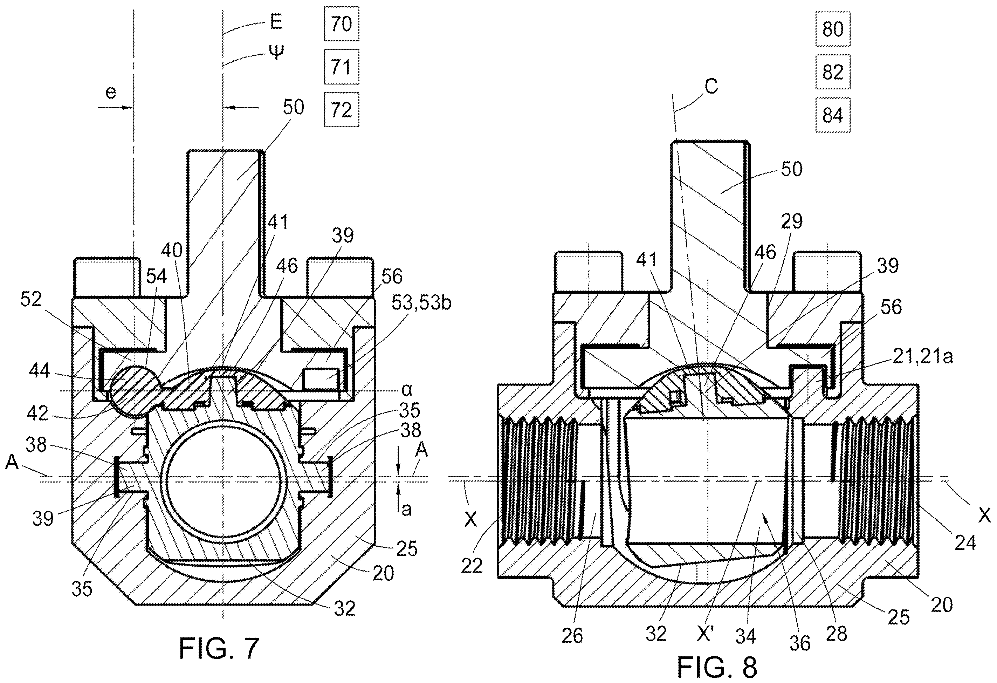

Referring to Figures 7 to 14 a second embodiment of the valve 10 will now be described having similar features to the first embodiment in which similar features will be referred to and are labelled in the figures by the same reference numerals. Figures 7 to 13 show a valve 10 for use in a pipe or other apparatus for passing fluid, that is movable from a first open position 11 in which unobstructed flow through the valve 10 is allowed to a second closed position 12 in which flow through the valve 10 is prevented. The valve 10 includes a body 20 that may include a housing 25 and a closing portion 27. The body 20 includes an inlet 22 and an outlet 24 defining a bore 26 connecting the inlet 22 and the outlet 24 through which fluid may flow when the valve 10 is in the open position 11 and which is obturated to prevent fluid from flowing through the valve 10 when in the closed position 12. The bore 26 has a bore centre defining an axis X extending along said bore centre.

An obturating portion 30 is shown for sealing the bore 26 for preventing the flow of fluid therethrough. The obturating portion 30 includes an inner face 34 defining a through aperture 36 through which fluid can flow when the valve 10 is in the open position 11. The through aperture 36 may be circular in profile and define an axis X' at its centre. Preferably the through aperture 36 has a radius "r" that is the same as the radius of the inlet 22 and outlet 24 to allow unobstructed flow through the valve 10 when in the open position 11, though it will be understood that in some circumstances when a restriction in flow may be desirable the through aperture 36 may be smaller. The obturating portion 30 also includes a sealing face 32 and the bore 26 includes a valve seat 28 for receiving said sealing face 32 for closing the bore 26 and preventing flow of fluid when the valve 10 is in the closed position 12. The sealing face 32 defines a plane β extending through the sealing face 32. The obturating portion 30 is constrained to move about one axis A such that it is limited to movement in one rotational degree of freedom. An arm 40 extends from the obturating portion 30. The arm 40 is connected to the obturating portion 30 for imparting movement thereto. Preferably the arm extends tangentially from the obturation portion 30. The arm 40 has a first end 41 pivotally connected to the obturating portion 30 at an arm pivot 46 and a second end 42. Thus, the arm 40 is movable relative to the body 20 in two rotational degrees of freedom. The first rotational degree of freedom about axis A due to the attachment to the obturating portion 30 and a second rotational degree of freedom about rotational axis C about which the arm 20 may rotate relative to the obturating portion 30.

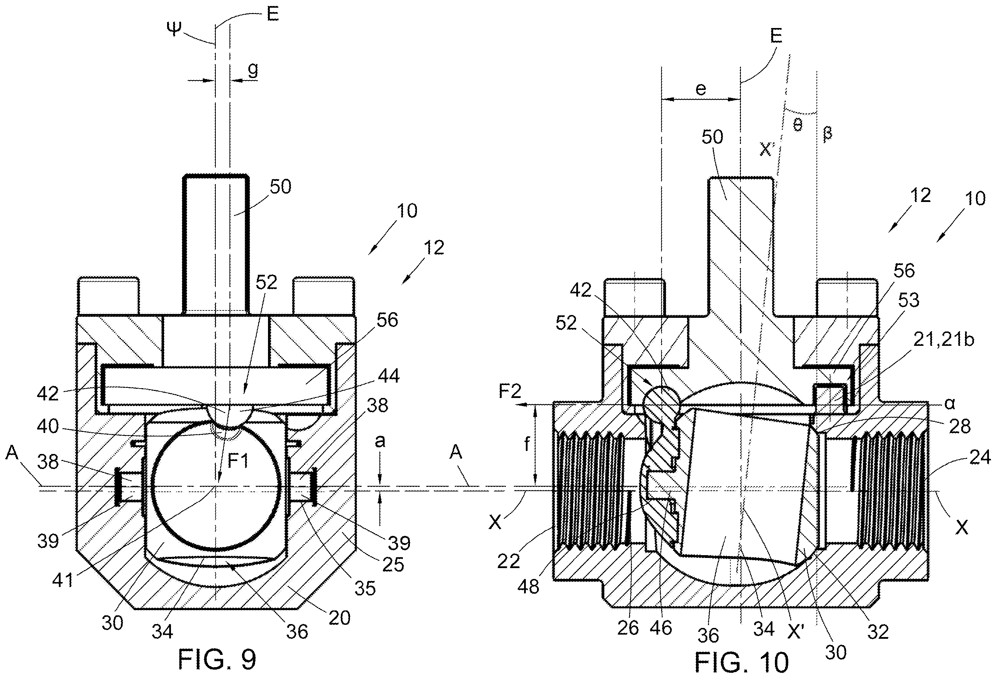

An actuation link 50 is provided extending along and rotatable about an axis E perpendicular to and intersecting the axis X. Together axis X and axis E define a vertical longitudinal plane ψ. The actuation link 50 is connectable to an actuator 70 for the rotation thereof and includes a connection point 52 offset a perpendicular distance e from the axis E. The actuator 70 may be powered such as a rotary or linear electric, hydraulic or pneumatic actuator and/or may be a means for manual actuation such as a handle 74 for manual actuation of the valve 10. The actuation link 50 is connected to the second end 42 of the arm 40 at the connection point 52. The connection point 52 is a three rotational degree of freedom pivotal connection that allows movement of the second end 42 of the arm 40 in and preferably limits said movement to three rotational degrees of freedom relative to the actuation link 50. Preferably the connection point 52 comprises a ball 44 and a socket 54. In figures 7 to 13 the connection point 52 is shown located on a cylindrical or radially and circumferentially extending portion 56 of the actuation link 50. However, it will be understood that the connection point 52 could also be offset from the axis E on a radially extending crank arm. The body 20 includes an actuation link locating means 29 for locating the actuation link 50. It will be noted that in figures 7 to 13 the actuation link locating means 29 is included in the closing portion 27, however, the locating means 29 may be included in the housing 25 and or the closing portion 27. Preferably the actuation link 50 is constrained by the locating means 29 to move in a single rotational degree of freedom about the axis E. The locating means 29 may comprise one or more axial and/or rotational, bearings or support faces. The body 20 and actuation link 50 may further comprise complementary movement stops 21, 53 for limiting movement of the actuation link 50. The complementary movement stops 21, 53 may comprise complementary valve open stops 21a and 53a and complementary valve close stops 21b and 53b each comprising surfaces that engage in the respective open position 11 and closed position 12. Figure 8 shows complementary valve open stop 21a. but 53a is not shown as it is removed by the section. Complementary valve open stops 21a and 53a are for limiting movement of the actuation link 50 when the valve is in the first open position 11. Figures 7 and 10 show valve close stops 21b and 53b for limiting movement of the actuation link 50 when the valve is in the closed position 12.

The obturating portion 30 is constrained to rotate in a single rotational degree of freedom in this second embodiment this is about a first axis A. The first axis A is fixed, perpendicular to the plane ψ and is offset a distance "a" from the axis X. Preferably the offset distance **a** is along axis E in the direction of the actuation link 50. Axis A is preferably coincident with axis E. Distance "**a**" is greater than zero. The valve 10 further includes a pair of pivots 38 on the axis A about which the obturating portion rotates. The pivots 38 may each include pivot pins 39 extending along axis A and one or more pivot apertures 35b in the body 20 within which the pivot pins 39 are accommodated and rotate.

The arm 40 is rotatable about an axis C relative to the obturating portion 30 about the arm pivot 46. The arm pivot 46 includes a further pivot pin 39 extending from the obturating portion 30 along axis C and is received and accommodated within a pivot aperture 48 at the first end 41 of the arm 40 about which the arm 40 rotates. The axis C is located in the plane ψ, intersects the axis A. The axis C is near perpendicular to the sealing face 32 and/or the plane β extending through the sealing face 32.

The arm 40 and obturating portion 30 may include an arm open stop 80 and/or an arm closed stop 82 for limiting rotation of the arm 40 about axis C relative to the obturating portion 30 in the open position 11 and the closed position 12, respectively. Preferably each stop comprises complementary radially and axially extending faces 84 relative to axis C on the arm 40 and on the obturating portion 30 located to engage in the respective open position 11 and/or closed position 12.

In figure 10 it can be seen that preferably the axis X' of the through aperture 36 of the obturating portion is not parallel to the plane β extending through the sealing face 32. Preferably there is an acute angle θ that is greater than zero degrees between the plane β and the axis X'. The angle θ is preferably greater than 0 as this reduces the angle through which the obturating portion 30 must rotate between the open position 11 and the closed position 12, however, the larger the angle θ the greater the size of the obturating portion 30 required for the same size of bore. The angle θ may be between 1 and 50 degrees but preferably is between 1 and 15 degrees and most preferably 10 degrees.

The valve 10 further includes a number of features to improve force and thus sealing between the sealing face 32 and the valve seat 28. Figures 9 and 10 show the valve in the closed position 12 in Figure 9 it can be seen there is a distance **g** which is greater than zero between the vertical plane ψ and the connection point 52 and thus the second end 42 of the arm 40. The offset **g** and the offset **a** mean further rotation of or torque applied to the actuation link 50 results in components of force acting to close the valve 10. A first component force F1 shown in Figure 9 from the connection point 52 down the arm 40 with a high mechanical advantage acting to rotate the obturating portion 30 about axis A into the valve seat 28. A further component of force F2 shown in figure 10 acting on the second end 42 of the arm 40 in the direction of the axis X away from the valve seat 28 is created by the longitudinal movement of the connection point 52 as it continues on its circular path. F2 also acts to rotate the obturating portion 30 about axis A and into the valve seat 28 improving sealing. Note that again there is high mechanical advantage due to the location of the connection point 52 on its arc of movement. It will be understood that **g** may tend to or be equal to zero in some geometries.

Also shown in Figure 10 there is a length **f** taken perpendicular to plane α and thus in the direction of axis E between the plane α and axis A. The arm 40 has the length **f** between the first end 41 and the second end 42, specifically there is the distance **f** between the arm pivot 46 at the first end 41 and the centre of rotation of the ball 44 at the second end 42. If **g** tends to 0 in order to achieve the most favourable geometry the radial offset **e** of the attachment point 52 from the axis E and the length of the arm **f** are related to the angle θ by the equation $\cos(\theta) = \frac{e}{f}$. However, for geometry where **g** is greater than 0 the relationship is also dependent on g and the radial offset **e** of the attachment point 52 from the axis E and the length of the arm **f** are related to the angle θ by the equation

$$\cos\left(-\cos^{-1}\left(\frac{f}{\sqrt{f^2 - g^2 + e^2}}\right) - \tan^{-1}\left(\frac{\sqrt{f^2 - g^2}}{e}\right) - \theta + 90\right) = \frac{e}{f}$$

.

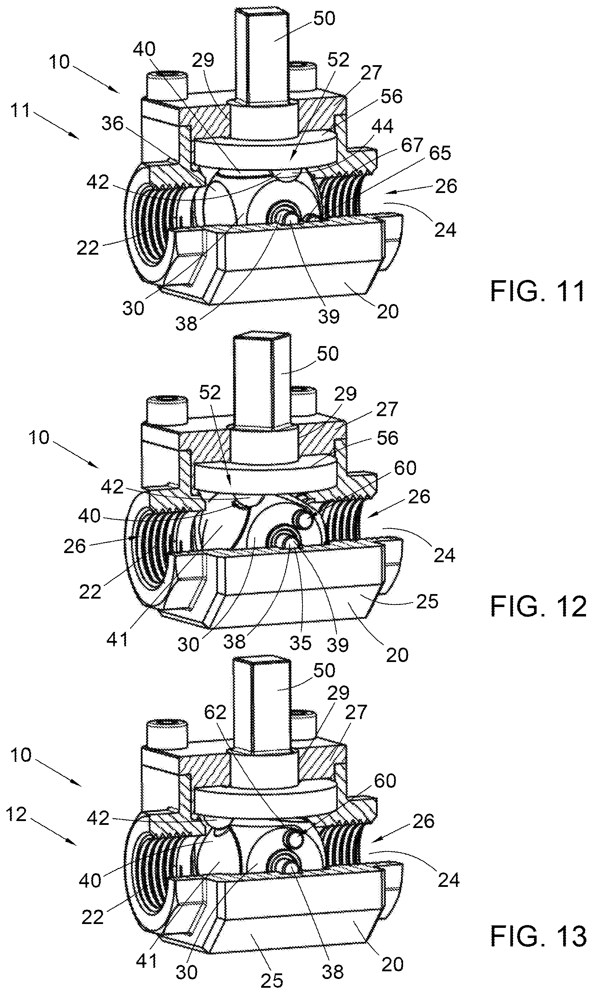

As for the first embodiment, in use the actuation link 50 is rotated about the axis E to move the valve 10 between the first open and second closed positions 11, 12. Figures 11 to 13 show the valve moving between the open position 11 and the closed position 12. A quarter section has been taken along the bore 26 of the housing 20 to show the position and movement of the obturating portion 30 and the arm 40 as the valve 10 moves between the open position 11 and closed position 12.

Figure 11 shows the valve in the open position 11 with the through aperture 36 in line with the bore 26 to allow unobstructed flow of fluid between the inlet 22 and the outlet 24. Therefore, preferably in the open position 11 the axis X' of the obturating portion is in alignment with the axis X of the housing to minimise resistance to flow. The arm 40 is located above the obturating portion 30 as displayed in Figure 11 with the ball offset laterally from the longitudinal plane ψ, preferably offset a distance greater than **r** and at or close to a location above the axis A. Note the first surfaces 66 and second surfaces 67 of the bore aligner 65 are engaged. The axis C will be lying on the plane ψ and will be at or close to the angle θ to the axis E. There is clearance between the valve seat 28 and the obturating portion because of the offset a of the axis A from the axis X. At the start of the rotation of the actuation link 50 from the open position 11 there is approximately a 1:1 relationship between the rotation of the actuation link 50 and the rotation of the obturating portion 30 about axis A.

Figure 12 shows the valve 10 mid way between the open position 11 and the closed position 12, the actuation link 50 has rotated approximately 45 degrees from the first open position 11 towards the closed position 12. In Figure 12 the actuation link 50 has rotated clockwise but the valve can be designed to rotate in the opposite way if required. Note that the obturating portion 30 has rotated about axis A more than half way towards the closed position as mechanical advantage builds towards the closed position 12. The arm 40 has rotated about axis C and is now diagonal across the bore 26. Note that the arm 40 has rotated less than 45 degrees and/or less than half the total rotation it will make to reach the closed position 12. As the arm 40 continues to move closer in angle to the plane ψ and the connection point 52 continues along an arc about E the ratio of movement in the direction of axis X per degree of rotation reduces and the mechanical advantage gained in rotating the obturating portion will continue to increase.

Figure 13 shows the valve 10 in the closed position 12. The second surfaces 62 of the valve seat force multiplier 60 can be seen extending from the obturating portion 30 however the first faces 61 of the housing 20 have been removed by the section. The sealing face 32 is now against the valve seat 28 to prevent flow of fluid between the inlet 22 and the outlet 24. The axis X' of the through aperture 36 is an angle θ short of perpendicular to the axis X and thus the obturating portion has also rotated through is an angle θ short of perpendicular. The arm 40 is resting with the second end 42 offset a distance **g** from the central longitudinal plane ψ. Over the last section of movement to close the valve 10 the angle between the arm 40 and the plane ψ moves closer to zero increasing the mechanical advantage providing F1 and the movement of the connection point 52 on its arc of movement approaches perpendicular to the plane ψ increasing the mechanical advantage providing F2. Both F1 and F2 act to rotate the obturating portion 30 about the axis A and close the valve 10. The obturating portion 30 has rotated an angle of up to 90 degrees but preferably less than 90 degrees, preferably the obturating portion 30 has rotated between 45 and 90 degrees and further preferably between 75 and 90 degrees. The actuation link 50 has rotated an angle up to 90 degrees and preferably has rotated 90 degrees.

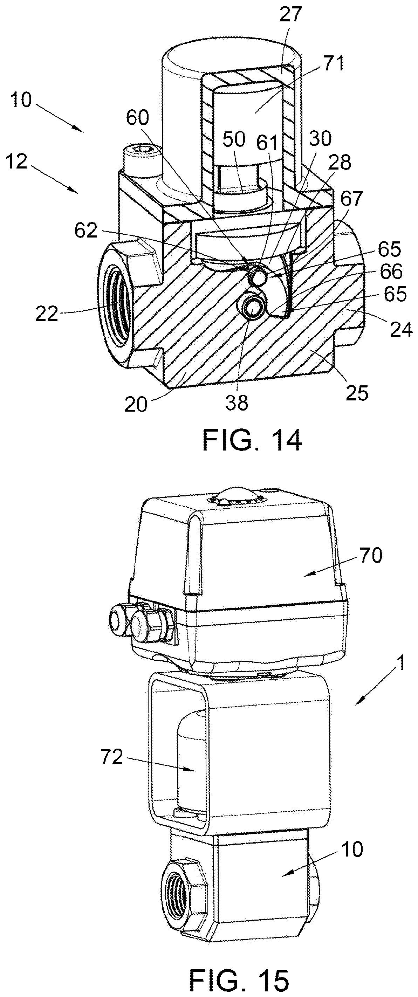

The valve 10 may also include a valve seat force multiplier 60 for improving engagement of the sealing face 32 with the valve seat 28 by increasing the force exerted on the valve seat 28 by the sealing face 32. The valve seat force multiplier 60 includes a first surface or surfaces 61 on the body 20 and second surface or surfaces 62 on the obturating portion 30. The surfaces 61, 62 are preferably radially and axially extending relative to axis A. Figure 14 shows the valve 10 in the same orientation as figure 10 and figure 8 with a longitudinal section taken closer to the viewer to show the valve seat force multiplier 60. In figure 14 one valve seat force multiplier 60 is shown on one side of the valve 10 but preferably a second valve seat force multiplier 60 is located on the other side of the valve 10 with the features shown in figure 14 mirrored about the central longitudinal plane ψ. The first surface or surfaces 61 are located above the axis A and facing the valve seat 28. The second surfaces 62 of the obturating portion 30 are located to engage the first surfaces 61 when the valve 10 is in the second closed position 12. The valve seat force multiplier 60 acts as a pivot fulcrum about which the obturating portion 30 can rotate and/or transmit force causing the sealing face 32 to exert an increased force on the valve seat 28 by the sealing face 32 as a result of the force F1 and F2. The force multiplier 60 will also take up any slack in the pivot 38 of axis A. The valve 10 may also include a bore aligner 65 shown in figure 14 including a first alignment stop 66 located on the body 20 and a second alignment stop 67 located on the obturating portion 30 positioned to engage the first alignment stop 66 when the axis X and the axis X' are aligned with the valve in the open position 11. The alignment stops 66, 67 are preferably complementary, radially and axially extending surfaces 66, 67 relative to axis A located to engage when the valve 10 is in the open position 11.

Figure 14 also shows a variant of the body 20 for improving sealing having no further apertures than the inlet 22 and outlet 24. The body 20 of figure 14 includes an actuation link 50 enclosed within the body 20 by the closing portion 27. Preferably the closing portion 27 is continuous with no aperture through which the actuation link 50 passes. The actuation link 50 includes a first magnetic coupling 71 within the body 20 for connecting with a second magnetic coupling 72 outside of the body. Thereby removing the need for any rotary seals and reducing the chances of leakage occurring at stem seals as no moving seals are required. This is particularly important when the fluid passing through the valve 10 is hydrogen. It will be noted that whilst the valve 10 displayed in figure 14 is of the second embodiment the features discussed in this paragraph can be used with any embodiment disclosed herein.

Figure 15 shows the valve 10 of any embodiment assembled with an actuator 70 attached to the actuation link 50. Figure 15 also shows the actuator 70 connected to a second magnetic coupling 72 for driving a first magnetic coupling 71 within the valve body 20. It will be understood that in embodiments without an enclosed actuation link 50 the actuator 70 may be directly connected to the actuation link 50.

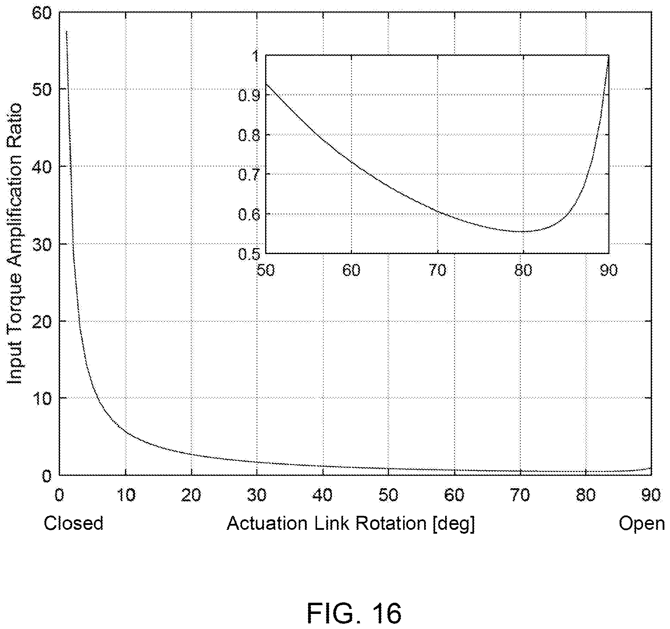

Figure 16 shows a graph displaying torque amplification or mechanical advantage resulting from the mechanism when moving the valve 10 between the closed and open positions 12, 11. The graph shows angular displacement of the actuation link on the X axis and the ratio of angular displacement of the actuation link 50 about axis E and thus input rotation against angular displacement of the obturating portion 30 about axis A on the Y axis. Note the insert shows a close up of the same data. The data displayed on the graph has been validated using a free body computational simulation.

Whilst the points that fluid can flow in and out of the valve 10 have been designated inlet 22 and outlet 24 it will be understood that fluid can flow in either direction through the valve 10 of the current invention.

A number of pivot pins 39 and pivot apertures 35, 35b, 48 are described herein. It will be understood that the location of each respective aperture and pin can be reversed with the same functional relationship for the pivot 38, 46; however, the orientation disclosed herein provides the best packaging compromise.

Any system feature as described herein may also be provided as a method feature, and vice versa. As used herein, means plus function features may be expressed alternatively in terms of their corresponding structure.

Any feature in one aspect or embodiment may be applied to other aspects or embodiments, in any appropriate combination and said combinations should be considered disclosed herein. In particular, method aspects may be applied to system or apparatus aspects, and vice versa. Furthermore, any, some and/or all features in one aspect or embodiment can be applied to any, some and/or all features in any other aspect or embodiment, in any appropriate combination.

It should also be appreciated that particular combinations of the various features described and defined in any aspects can be implemented and/or supplied and/or used independently.


**Claims**

**1.**    A valve (10) comprising:

a valve body (20) having an Inlet (22) and an outlet (24) defining a bore (26) having a central axis X at the bore centre and a radius **r;**

a valve obturating portion (30), an arm (40) and a rotary actuation link (50), each movable between a first open position (11) and a second closed position (12);

the valve obturating portion (30) being constrained to rotate about a maximum of two axes of rotation and including a sealing face (32) for sealing the bore (26) when the obturating portion (30) is in the second closed position (12), an inner face (34) defining a through aperture (36) through which a fluid may pass when the obturating portion (30) is in the first open position (11);

the arm (40) having a first end (41) and a second end (42);

the outlet (24) including a valve seat (28) for receiving said sealing face (32) when in the closed position (12);

the rotary actuation link (50) being connectable to an actuator (70) for moving the valve (10) between the first open position (11) and the second closed position (12), rotatable about an axis E perpendicular to the Axis X and having a connection point (52) radially offset a distance "**e**" from the axis E;

wherein the arm (40) extends from the obturating portion (30), having the first end (41) connected to the obturating portion (30) for imparting movement thereto and the second end (42) pivotally connected to the actuation link (50) at the connection point (52),

**characterized in that**

the arm (40) is constrained to rotate about two axes of rotation.

2. The valve (10) according to claim 1 wherein the connection point (52) is located on and is movable in a plane $\alpha$ perpendicular to the axis E from the first open position (11) to the second closed position (12).

3. The valve (10) according one of claim 1 or claim 2 including a vertical plane $\psi$ defined by the axis X and the axis of rotation E of the actuator link (50); wherein the obturating portion (30) has an axis of rotation A that is perpendicular to the plane $\psi$ at least when the valve (10) is in the open position (11) and closed position (12) and optionally wherein the axis A is offset from the central axis X in the direction of the rotary actuation link (50) by a distance "**a**" toward the connection point (52), and the distance **a** is greater than 0.

4. The valve (10) according to any preceding claim wherein the through aperture (36) of the obturating portion (30) includes a bore centre having an axis X', a plane $\beta$ extending through the sealing face (32), defining an angle $\theta$ therebetween and wherein the angle $\theta$ greater than zero and or less than 50 degrees and/or wherein the axis E intersects with the Axis X.

5. The valve (10) according to any preceding claim wherein the second end (42) of the arm (40) is pivotally connected to the actuation link (50) at connection point (52) such that the second end (42) is free to rotate in three axes relative to the connection point (52) and/or wherein the second end (42) of the arm (40) comprises a ball (44) and the connection point (52) comprises a socket (54) and/or wherein the distance e is greater than the radius r.

6. The valve (10) according to any previous claim wherein the actuator link (50) is rotatable between 45 and 180 degrees between the first open position (11) and the second closed position (12) and/or wherein the body (20) includes a movement stop (21) for limiting movement of the actuation link (50) when the valve (10) is in the first open position (11) or the second closed position (12).

7. The valve (10) according to any preceding claim wherein the obturating portion (30) is rotatable about a second axis of rotation B and fixed to the arm (40) so as to move therewith; and optionally wherein the axis B is coincident with the axis X.

8. The valve (10) according to claim 7 wherein the body (20) includes one or more circumferentially extending channels (23);

further including one or more followers (37) free to move along said one or more circumferentially extending channels (23) for providing the second axis of rotation B to the obturating portion (30).

9. The valve (10) according to claim 8 when dependent on claim 3 wherein the one or more followers (37) are elongate and the obturating portion (30) is rotatably connected to the one or more followers (37) at a pair of pivots (38) for providing rotation of the obturating portion (30) about the axis A; or

wherein the followers (37) comprise a cylindrical protrusion on the obturating portion (30) on the axis of rotation A about which the obturating portion may pivot.

10. The valve (10) according to claim 8 or claim 9 wherein the circumferentially extending channels (23) extend about the axis X, preferably in a plane ω perpendicular to the axis X.

11. The valve (10) according to claim 3 or claims 4 to 6 when dependent on claim 3 wherein the obturating portion (30) is constrained to rotate about a single axis of rotation and that axis is the axis A and optionally wherein the axis A is fixed perpendicular to the axis E and optionally wherein the arm (40) is pivotally connected to the obturating portion (30) at an arm pivot connection (46) and constrained to rotate about a single axis C relative thereto.

12. The valve (10) according to any one of claim 3 when dependent on claim 2 or claims 4 to 11 when dependent on claim 3 when dependent on claim 2 wherein there is a distance "**f**" perpendicular to the plane α, between the plane α and the axis A and the first end (41) and the second end (42) of the arm (40) are separated by the distance f and optionally wherein in the closed position (12) the second end (42) of the arm (40) is located on the plane ψ and the relationship between the angle θ, the distance e and the distance **f** is defined by the equation $\cos(\theta) = \dfrac{e}{f}$ .

13. The valve (10) of any one of claim 3 or claims 4 to 12 when dependent on claim 3 wherein in the closed position (12) the second end (42) of the arm (40) is offset a distance **g** that is greater than 0 from said vertical plane ψ, for providing a sealing force between the seat (28) and the sealing face (32).

14. The valve (10) according to any preceding claim wherein the body (20) includes a housing (25) and a closing portion (27) and/or wherein the actuation link (50) is enclosed and the only apertures therein are the inlet (22) and the outlet (24) and/or wherein the actuation link (50) includes a first magnetic coupling (71) for receiving an actuating force from an actuator (70) comprising a second magnetic coupling (72).

15. A valve assembly (1) including the valve (10) as claimed in any one of claims 1 to 14, an actuator (70) connected to the actuation link (50) for moving the valve between a first open position (11) and a second closed position (12) and optionally wherein the actuation link (50) includes a first magnetic coupling (71) and the actuator (70) comprises a second magnetic coupling (72) magnetically coupled to the first magnetic coupling (71) for passing torque therebetween.


**Patentansprüche**

1. Ventil (10), umfassend:
einen

Ventilkörper (20) mit einem Einlass (22) und einem Auslass (24), die eine Bohrung (26) mit einer zentralen Achse X in der Bohrungsmitte und einem Radius r definieren:

einen Ventilverschlussabschnitt (30), einen Arm (40) und ein Drehbetätigungsglied (50), die jeweils zwischen einer ersten offenen Position (11) und einer zweiten geschlossenen Position (12) bewegbar sind; wobei der Ventilverschlussabschnitt (30)

beschränkt ist, sich um maximal zwei Drehachsen

zu drehen, und eine Dichtfläche (32) zum Abdichten der Bohrung (26) einschließt, wenn sich der Verschlussabschnitt (30) in der zweiten geschlossenen Position (12) befindet, wobei eine Innenfläche (34) eine Durchgangsöffnung (36) definiert, durch die ein Fluid passieren kann, wenn sich der Verschlussabschnitt (30) in der ersten offenen Position (11) befindet;
wobei der Arm (40) ein erstes Ende (41) und ein zweites Ende (42) aufweist;
wobei der Auslass (24) einen Ventilsitz (28) zum Aufnehmen der Dichtfläche (32) in der geschlossenen Position (12) einschließt;
wobei das Drehbetätigungsglied (50) mit

einem Stellantrieb (70) verbindbar ist, um das Ventil (10)

zwischen der ersten offenen Position (11) und der zweiten geschlossenen Position (12) zu bewegen, die um eine Achse E senkrecht zu der Achse X drehbar ist und einen Verbindungspunkt (52) aufweist, der um einen Abstand "e" von der Achse E radial versetzt ist; wobei sich der Arm (40) von dem Verschlussabschnitt (30) erstreckt, wobei das erste Ende (41) mit dem Verschlussabschnitt (30) verbunden ist, um diesem eine Bewegung zu übertragen, und das zweite Ende (42) schwenkbar mit dem Betätigungsglied (50) an dem Verbindungspunkt (52) verbunden ist, **dadurch gekennzeichnet, dass** der Arm (40) beschränkt ist, sich um zwei Drehachsen zu drehen.

2. Ventil (10) nach Anspruch 1, wobei sich der Verbindungspunkt (52) auf einer Ebene α senkrecht zu der Achse E befindet und bewegbar ist von der ersten offenen Position (11) in die zweite geschlossene Position (12).

3. Ventil (10) nach einem der Ansprüche 1 oder 2, das eine vertikale Ebene ψ einschließt, die durch die Achse X und die Drehachse E des Betätigungsglieds (50) definiert ist; wobei der Verschlussabschnitt (30) eine Drehachse A aufweist, die zumindest dann senkrecht zu der Ebene ψ ist, wenn sich das Ventil (10) in der geöffneten Position (11) und der geschlossenen Position befindet (12) befindet, und optional, wobei die Achse A von der zentralen Achse X in Richtung des Drehbetätigungsglieds (50) um einen Abstand "a" in Richtung des Verbindungspunkts (52) versetzt ist und der Abstand a größer als 0 ist.

4. Ventil (10) nach einem der vorstehenden Ansprüche, wobei die Durchgangsöffnung (36) des Verschlussabschnitts (30) ein Bohrungszentrum mit einer Achse X' einschließt, wobei sich eine Ebene β durch die Dichtfläche (32) erstreckt und zwischen diesen einen Winkel θ definiert und wobei der Winkel θ größer als Null und/oder kleiner als 50 Grad ist und/oder wobei die Achse E die Achse X schneidet.

5. Ventil (10) nach einem der vorstehenden Ansprüche, wobei das zweite Ende (42) des Arms (40) an einem Verbindungspunkt (52) schwenkbar mit dem Betätigungsglied (50) an einem Verbindungspunkt (52) verbunden ist, sodass das zweite Ende (42) in drei Achsen relativ zu dem Verbindungspunkt frei drehbar ist, und/oder wobei das zweite Ende (42) des Arms (40) eine Kugel (44) umfasst und der Verbindungspunkt (52) eine Fassung (54) umfasst und/oder wobei der Abstand e größer ist als der Radius r.

6. Ventil (10) nach einem der vorstehenden Ansprüche, wobei das Betätigungsglied (50) zwischen der ersten offenen Position (11) und der zweiten geschlossenen Position (12) um 45 bis 180 Grad drehbar ist und/oder wobei der Körper (20) einen Bewegungsanschlag (21) einschließt, um die Bewegung des Betätigungsglieds (50) zu begrenzen, wenn das Ventil (10) in der ersten offenen Position (11) oder der zweiten geschlossenen Position (12) ist.

7. Ventil (10) nach einem der vorstehenden Ansprüche, wobei der Verschlussabschnitt (30) um eine zweite Drehachse B drehbar und an dem Arm (40) befestigt ist, sodass es sich mit diesem bewegt; und optional, wobei die Achse B mit der Achse X zusammenfällt.

8. Ventil (10) nach Anspruch 7, wobei der Körper (20) einen oder mehrere sich in Umfangsrichtung erstreckende Kanäle (23) einschließt; und ferner einen oder mehrere Mitnehmer (37) einschließt, die sich frei entlang des einen oder der mehreren sich in Umfangsrichtung erstreckenden Kanäle (23) bewegen können, um dem Verschlussabschnitt (30) die zweite Drehachse B bereitzustellen.

9. Ventil (10) nach Anspruch 8 in Abhängigkeit von Anspruch 3, wobei der eine oder die mehreren Mitnehmer (37) länglich sind und der Verschlussabschnitt (30) mit dem einen oder den mehreren Mitnehmern (37) an einem Paar Drehzapfen (38) drehbar verbunden ist, um eine Drehung des Verschlussabschnitts (30) um die Achse A bereitzustellen; oder wobei die Mitnehmer (37) einen zylindrischen Vorsprung an dem Verschlussabschnitt (30) auf der Drehachse A umfassen, um die der Verschlussabschnitt schwenken kann.

10. Ventil (10) nach Anspruch 8 oder Anspruch 9, wobei sich die sich in Umfangsrichtung erstreckenden Kanäle (23) um die Achse X erstrecken, bevorzugt in einer Ebene ω senkrecht zu der Achse X.

11. Ventil (10) nach Anspruch 3 oder den Ansprüchen 4 bis 6 in Abhängigkeit von Anspruch 3, wobei der Verschlussabschnitt (30) beschränkt ist, sich um eine einzige Drehachse zu drehen, und diese Achse die Achse A ist, und optional, wobei die Achse A senkrecht zu der Achse E fixiert ist und optional, wobei der Arm (40) mit dem Verschlussabschnitt (30) an einer Arm-Schwenkverbindung (46) schwenkbar verbunden ist und beschränkt ist, sich um eine einzige Achse C relativ dazu zu drehen.

**12.** Ventil (10) nach einem der Ansprüche 3 in Abhängigkeit von Anspruch 2 oder 4 bis 11 in Abhängigkeit von Anspruch 3 in Abhängigkeit von Anspruch 2, wobei zwischen der Ebene α und der Achse A ein Abstand "f" senkrecht zu der Ebene α vorhanden ist und das erste Ende (41) und das zweite Ende (42) des Arms (40) durch den Abstand f voneinander getrennt sind und optional, wobei in der geschlossenen Position (12) das zweite Ende (42) des Arms (40) auf der Ebene ψ ist und die Beziehung zwischen dem Winkel θ, dem Abstand e und dem Abstand f durch die Gleichung

$$\cos(\theta) = \frac{e}{f}$$ definiert ist.

**13.** Ventil (10) nach einem der Ansprüche 3 oder 4 bis 12 in Abhängigkeit von Anspruch 3, wobei in der geschlossenen Position (12) das zweite Ende (42) des Arms (40) um einen Abstand g, der größer als 0 ist, von der vertikalen Ebene ψ versetzt ist, um eine Dichtkraft zwischen dem Sitz (28) und der Dichtfläche (32) bereitzustellen.

**14.** Ventil (10) nach einem der vorstehenden Ansprüche, wobei der Körper (20) ein Gehäuse (25) und einen Verschlussabschnitt (27) einschließt und/oder wobei das Betätigungsglied (50) umschlossen ist und die einzigen Öffnungen darin der Einlass (22) und der Auslass sind (24) sind und/oder wobei das Betätigungsglied (50) eine erste Magnetkupplung (71) zum Aufnehmen einer Betätigungskraft von einem Stellantrieb (70) einschließt, umfassend eine zweite Magnetkupplung (72).

**15.** Ventilbaugruppe (1), die das Ventil (10) nach einem der Ansprüche 1 bis 14 einschließt, einen Stellantrieb (70), der mit dem Betätigungsglied (50) zum Bewegen des Ventils zwischen einer ersten offenen Position (11) und einer zweiten geschlossenen Position (12) verbunden ist, und optional, wobei das Betätigungsglied (50) eine erste Magnetkupplung (71) einschließt und der Stellantrieb (70) eine zweite Magnetkupplung (72) umfasst, die magnetisch mit der ersten Magnetkupplung (71) gekoppelt ist, um ein Drehmoment dazwischen zu übertragen.

**Revendications**

**1.** Soupape (10) comprenant :
un

corps de soupape (20) ayant une entrée (22) et une sortie (24) définissant un alésage (26) ayant un axe central X au centre de l'alésage et un rayon r ;

une partie obturatrice de soupape (30), un bras (40) et un lien d'actionnement rotatif (50), chacun pouvant être déplacé entre une première position ouverte (11) et une seconde position fermée (12) ; la partie obturatrice de soupape (30) étant

contrainte de tourner autour de deux axes de rotation

au maximum et comprenant une face d'étanchéité (32) pour sceller l'alésage (26) lorsque la partie obturatrice (30) est dans la seconde position fermée (12), une face intérieure (34) définissant une ouverture traversante (36) à travers laquelle un fluide peut passer lorsque la partie obturatrice (30) est dans la première position ouverte (11) ; le bras (40) ayant une première extrémité (41) et une seconde extrémité (42) ; la sortie (24) comprend un siège de soupape (28) destiné à recevoir ladite face d'étanchéité (32) en position fermée (12) ; le lien d'actionnement rotatif (50) étant

connectable à un actionneur (70) pour déplacer la soupape (10)

entre la première position ouverte (11) et la seconde position fermée (12), tournant autour d'un axe E perpendiculaire à l'axe X et ayant un point de connexion (52) décalé radialement d'une distance "e" par rapport à l'axe E ; dans laquelle le bras (40) s'étend à partir de la partie obturatrice (30), ayant la première extrémité (41) reliée à la partie obturatrice (30) pour lui conférer un mouvement et la seconde extrémité (42) reliée de manière pivotante au lien d'actionnement (50) au niveau du point de connexion (52), **caractérisée par le fait que** le bras (40) est contraint de tourner autour de deux axes de rotation.

2. Soupape (10) selon la revendication 1 dans laquelle le point de connexion (52) est situé sur et est mobile dans un plan α perpendiculaire à l'axe E de la première position ouverte (11) à la seconde position fermée (12).

3. Soupape (10) selon l'une des revendications 1 ou 2 comprenant un plan vertical ψ défini par l'axe X et l'axe de rotation E du lien d'actionnement (50) ; dans laquelle la partie obturatrice (30) a un axe de rotation A qui est perpendiculaire au plan ψ au moins lorsque la soupape (10) est en position ouverte (11) et en position fermée (12) et éventuellement dans laquelle l'axe A est décalé de l'axe central X dans la direction du lien d'actionnement rotatif (50) d'une distance "a" vers le point de connexion (52), et la distance a est supérieure à 0.

4. Soupape (10) selon l'une quelconque des revendications précédentes dans laquelle l'ouverture traversante (36) de la partie obturatrice (30) comprend un centre d'alésage ayant un axe X', un plan β s'étendant à travers la face d'étanchéité (32), définissant un angle θ entre eux et dans laquelle l'angle θ est supérieur à zéro et ou inférieur à 50 degrés et/ou dans lequel l'axe E croise l'axe X.

5. Soupape (10) selon l'une quelconque des revendications précédentes dans laquelle la seconde extrémité (42) du bras (40) est reliée de manière pivotante au lien d'actionnement (50) au niveau du point de connexion (52) de sorte que la seconde extrémité (42) est libre de tourner selon trois axes par rapport au point de connexion (52) et/ou dans laquelle la seconde extrémité (42) du bras (40) comprend une bille (44) et le point de connexion (52) comprend une douille (54) et/ou dans laquelle la distance e est plus grande que le rayon r.

6. Soupape (10) selon l'une quelconque des revendications précédentes dans laquelle le lien d'actionnement (50) est rotatif entre 45 et 180 degrés entre la première position ouverte (11) et la seconde position fermée (12) et/ou dans laquelle le corps (20) comprend une butée de mouvement (21) pour limiter le mouvement du lien d'actionnement (50) lorsque la soupape (10) est dans la première position ouverte (11) ou dans la seconde position fermée (12).

7. Soupape (10) selon l'une quelconque des revendications précédentes dans laquelle la partie obturatrice (30) est rotative autour d'un second axe de rotation B et fixée au bras (40) de manière à se déplacer avec lui ; et éventuellement dans lequel l'axe B coïncide avec l'axe X.

8. Soupape (10) selon la revendication 7, dans laquelle le corps (20) comprend un ou plusieurs canaux (23) s'étendant sur la circonférence ;
comprenant en outre un ou plusieurs suiveurs (37) libres de se déplacer le long desdits un ou plusieurs canaux (23) s'étendant sur la circonférence pour fournir le second axe de rotation B à la partie obturatrice (30).

9. Soupape (10) selon la revendication 8 lorsqu'elle dépend de la revendication 3, dans laquelle le ou les suiveurs (37) sont allongés et la partie obturatrice (30) est reliée de manière rotative au(x) suiveur(s) (37) au niveau d'une paire de pivots (38) pour permettre la rotation de la partie obturatrice (30) autour de l'axe A ; ou dans laquelle les suiveurs (37) comprennent une protubérance cylindrique sur la partie obturatrice (30) sur l'axe de rotation A autour de laquelle la partie obturatrice peut pivoter.

10. Soupape (10) selon la revendication 8 ou la revendication 9 dans laquelle les canaux (23) s'étendant sur la circonférence autour de l'axe X, de préférence dans un plan ω perpendiculaire à l'axe X.

11. Soupape (10) selon la revendication 3 ou les revendications 4 à 6 lorsqu'elles dépendent de la revendication 3, dans laquelle la partie obturatrice (30) est contrainte de tourner autour d'un seul axe de rotation et cet axe est l'axe A et éventuellement dans laquelle l'axe A est fixé perpendiculairement à l'axe E et éventuellement dans laquelle le bras (40) est relié de manière pivotante à la partie obturatrice (30) au niveau d'une connexion de pivot de bras (46) et contraint de tourner autour d'un seul axe C par rapport à celui-ci.

12. Soupape (10) selon l'une quelconque de la revendication 3 lorsqu'elle dépend de la revendication 2 ou des revendications 4 à 11 lorsqu'elle dépend de la revendication 3 lorsqu'elle dépend de la revendication 2, dans laquelle il existe une distance "f" perpendiculaire au plan α, entre le plan α et l'axe A et la première extrémité (41) et la seconde extrémité (42) du bras (40) sont séparées par la distance f et éventuellement dans laquelle dans la position fermée (12) la seconde extrémité (42) du bras (40) est située sur le plan ψ et la relation entre l'angle θ, la distance e et la distance f est définie par l'équation $\cos(\theta) = \dfrac{e}{f}$.

**13.** Soupape (10) selon l'une quelconque des revendications 3 ou des revendications 4 à 12 lorsqu'elles dépendent de la revendication 3, dans laquelle, en position fermée (12), la seconde extrémité (42) du bras (40) est décalée d'une distance g supérieure à 0 par rapport audit plan vertical $\psi$, afin de fournir une force d'étanchéité entre le siège (28) et la face d'étanchéité (32).

**14.** Soupape (10) selon l'une quelconque des revendications précédentes dans laquelle le corps (20) comprend un boîtier (25) et une partie de fermeture (27) et/ou dans laquelle le lien d'actionnement (50) est enfermé et les seules ouvertures sont l'entrée (22) et la sortie (24) et/ou dans laquelle le lien d'actionnement (50) comprend un premier couplage magnétique (71) pour recevoir une force d'actionnement d'un actionneur (70) comprenant un second couplage magnétique (72).

**15.** Ensemble soupape (1) comprenant la soupape (10) selon l'une quelconque des revendications 1 à 14, un actionneur (70) connecté au lien d'actionnement (50) pour déplacer la soupape entre une première position ouverte (11) et une seconde position fermée (12) et, éventuellement, dans lequel le lien d'actionnement (50) comprend un premier couplage magnétique (71) et l'actionneur (70) comprend un second couplage magnétique (72) couplé magnétiquement au premier couplage magnétique (71) pour transmettre un couple entre eux.

FIG. 1

FIG. 2

FIG. 3

FIG. 4

EP 4 677 250 B1

FIG. 5

FIG. 6

EP 4 677 250 B1

FIG. 8

FIG. 7

20

FIG. 9

FIG. 10

EP 4 677 250 B1

FIG. 11

FIG. 12

FIG. 13

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2277975 A
- US 3934606 A
- US 3515371 A
- US 2021215259 A1
- US 2765142 A
- WO 2019229265 A1